# EUROPEAN PATENT SPECIFICATION

(11) **EP 4 242 167 B1**
(45) Date of publication and mention of the grant of the patent: **30.04.2025**
(21) Application number: 23160028.9
(22) Date of filing: 03.03.2023
(51) Int. Cl.: B66F 9/075, B62D 1/04

(54) **INDUSTRIAL TRUCK WITH AN IMPROVED KNOB-TYPE STEERING WHEEL**
FLURFÖRDERZEUG MIT EINEM VERBESSERTEN KNOPFLENKRAD
CHARIOT DE MANUTENTION DOTÉ D'UN VOLANT DE DIRECTION AMÉLIORÉ DE TYPE BOUTON

(30) Priority: 10.03.2022 IT 202200004562
(43) Date of publication of application: 13.09.2023
(73) Proprietor: Toyota Material Handling Manufacturing Italy S.p.A, 40132 Bologna (IT)
(72) Inventor: Fremondi, Simone, 40132 Bologna (IT)
(74) Representative: Hoffmann Eitle

(56) References cited:
- DE-A1- 102008 024 751
- US-A- 4 716 980
- US-A1- 2014 303 846
- US-B2- 7 278 509

## Description

### TECHNICAL FIELD OF THE INVENTION

The field of the present invention concerns an industrial truck, such as e.g. a forklift truck, with an improved knob-type steering wheel.

### BACKGROUND OF THE INVENTION

Industrial trucks are well known in the art as vehicles used e.g. on an industrial site for handling and transporting material. A most common example of an industrial truck is a forklift truck including a chassis, a mast pivotally mounted on the chassis and a fork slidably mounted on the mast. The fork is used to lift a load, for example for transporting ware in a store. The mast can be tilted with respect to the chassis to facilitate loading and unloading of the ware. The fork can be replaced also by other material handling devices.

It is also known to provide the industrial trucks with a knob-type steering wheel for steering the truck using only one hand. The knob-type steering wheel includes a knob that is graspable by the user to rotate the steering wheel. The knob is mounted in a rotatable manner on the steering wheel, which is in turn rotatable around a hub of the steering wheel to command the steering column of the industrial truck.

During operation of the industrial truck, it is extremely important to have a good visibility of the material handling device, e.g. of the fork slidably mounted on the mast and the load carried by the fork. The material handling device is typically mounted on the front of the industrial truck, so that it is important to have high visibility of the area in front of the cabin of the industrial truck. However, the known steering wheels used in the industrial trucks might impair the visibility of the area in front of the cabin of the user. Hence, there is a need of an improvement in the knob-type steering wheel of the industrial truck.

DE 10 2008 024751 A1 relates to an industrial truck with exchangeable controls.

US 7 278 509 B2 relates to a counterbalanced forklift truck with a device for electro-hydraulic or electric steering.

US 2014/303846 A1 relates to a vehicle steering system.

Document US 4 716 980 A discloses an industrial truck comprising a frame, a plurality of truck wheels mounted on the frame, and a steering wheel for controlling the steering of the truck wheels by means of a rotatable steering wheel, wherein the steering wheel comprises: a hub that is rotatable with respect to the frame around a rotation axis of the steering wheel and that is connected to a steering column of the industrial truck, a first spoke having a first outer end and a first central end, the first central end being integrally connected to the hub, a second spoke having a second outer end and a second central end, the second central end being integrally connected to the hub, a peripheral member connecting the first outer end of the first spoke to the second outer end of the second spoke, wherein a recess is defined by the first spoke, the second spoke and the peripheral member, wherein the peripheral member includes a portion configured to be grasped by the hand of a user, and wherein the peripheral member connects the first and second outer ends of the first and second spokes along a path that does not surround the rotation axis of the steering wheel.

### SUMMARY OF THE INVENTION

In view of the above problems, it is a general object of the present invention to improve the knob-type steering wheel of the industrial truck by achieving high visibility. More specifically, it is an object of the invention to provide a knob-type steering wheel of the industrial truck that may allow an improved visibility of the front area of the industrial truck, e.g. the area in front of the user cabin. A further object is to provide a knob-type steering wheel that may reduce costs and usage of material. A further object of the invention is to provide a steering wheel that can ensure high operability and comfort to the user while driving.

In view of the above object, the present invention proposes an industrial truck comprising a frame, a plurality of truck wheels mounted on the frame, and a knob-type steering wheel for controlling the steering of the truck wheels by means of a rotatable knob of the steering wheel,
wherein the steering wheel comprises:
   - a hub that is rotatable with respect to the frame around a rotation axis of the steering wheel and that is connected to a steering column of the industrial truck,
   - a first spoke having a first outer end and a first central end, the first central end being integrally connected to the hub,
   - a second spoke having a second outer end and a second central end, the second central end being integrally connected to the hub,
   - a peripheral member connecting the first outer end of the first spoke to the second outer end of the second spoke, wherein a recess is defined by the first spoke, the second spoke and the peripheral member, wherein the peripheral member includes a portion configured to be grasped by the hand of a user,
wherein the knob is connected in a rotatable manner to the peripheral member and configured to be grasped by the user for rotating the steering wheel around the rotation axis,
characterized in that the first and second spokes are inclined with respect to each other of an angle (α) in the range 40°-140°, the peripheral member is positioned below the hub when the steering wheel is causing a straight trajectory of the industrial truck, and the peripheral member connects the first and second outer ends of the first and second spokes along a path that does not surround the rotation axis of the steering wheel.

### BRIEF DESCRIPTION OF THE DRAWINGS

The above and other advantages of the present invention will be illustrated with reference to an example embodiment of the invention, described with reference to the appended drawings listed as follows.
Fig. 1 shows a schematic lateral view of an industrial truck according to an embodiment of the invention;
Fig. 2 show a front view of an embodiment of the steering wheel according to the invention;
Fig. 3 shows a lateral view of an embodiment of the steering wheel according to the invention.

### DETAILED DESCRIPTION OF THE PREFERRED EMBODIMENTS

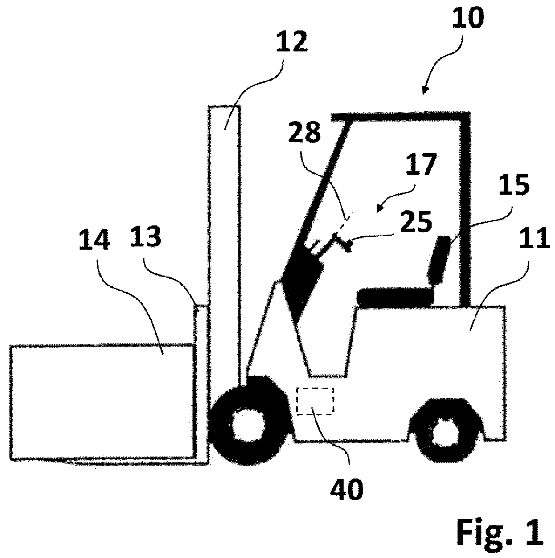

Figure 1 shows an industrial truck 10 according to an embodiment of the present invention, e.g. a forklift truck. The industrial truck 10 includes a chassis (or frame) 11, a mast 12 pivotally mounted on the chassis 11 and lifting element 13 (e.g. a fork) for lifting a load 14; the lifting element 13 is mounted on the mast 12 in a slidable manner along the mast 12; in figure 1 the lifting element 13 is shown in a lowered position. However, the material handling device for handling the load could also be implemented in different ways, according to the known art, e.g. a pincer or a frame for transporting glass slabs.

The industrial truck 10 may be electrically driven or may include an endothermic motor, or may have a hybrid drive system. Further, the industrial truck 10 might include four wheels or three wheels disposed on a front axle and a rear axle. The industrial truck comprises a user seat 15 and an armrest (not shown) on a side of the user seat, preferably on the right side of the user seat 15. A display (not shown) may be positioned at the end of the armrest. However, also other positions of the display can be considered according to the present invention, as further described herein; even plural displays may be provided. The industrial truck 10 includes a knob-type steering wheel 17 for controlling the steering of the truck wheels by means of a rotatable knob 25 of the steering wheel. The knob-type steering wheel 17 can be maneuvered by the user with one hand by grasping the rotatable knob, so that the other hand can be used to control e.g. the movement of fork 13 and of the lifting assembly. The steering wheel 17 is positioned in front of the user seat 15 in a cabin of the truck. The steering wheel 17 is rotatably around an axis 28 to command a corresponding rotation to a steering column (not shown) of the industrial truck 10.

The industrial truck includes a control unit 40 (schematically represented in dashed lines in fig. 1) configured to control various operation of the industrial truck. In the present disclosure, the control unit 40 can be also referred to as controller 40. The display function of a display of the industrial truck is controlled by the controller 40.

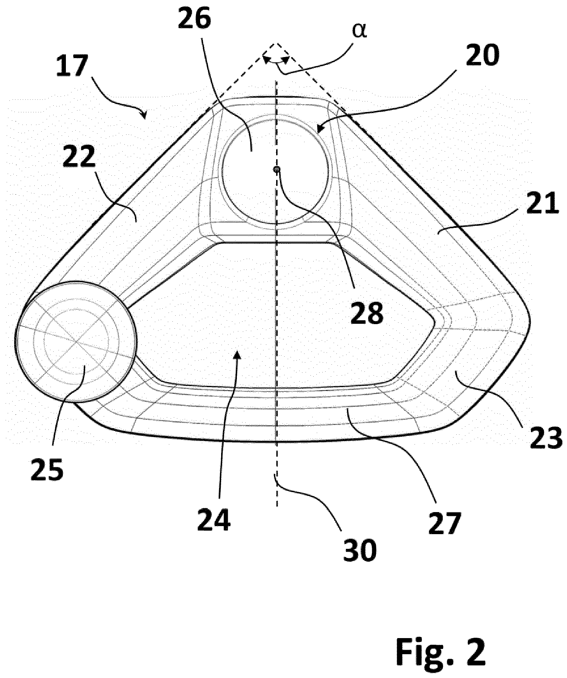

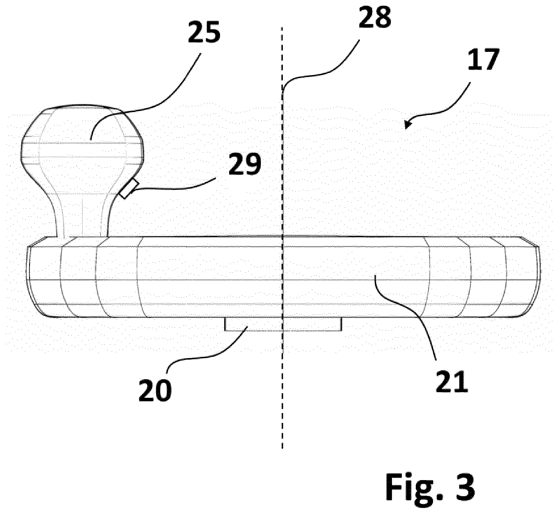

In figures 2 and 3 the knob-type steering wheel 17 is shown in more details. Specifically, the steering wheel 17 comprises a hub 20 that is rotatable with respect to the frame around the rotation axis 28 of the steering wheel and that is connected to a steering column of the industrial truck. The rotation of the hub 20 around its rotation axis 28 causes the rotation of the steering column of the industrial truck 10.

The steering wheel 17 further comprises a first spoke 21 and a second spoke 22 both having a central end that is integrally connected to the hub 20. The outer ends of the first and second spokes 21, 22 are connected by a peripheral member 23. Preferably, the peripheral member 23 is integral with the first and the second spokes 21, 22, e.g. formed in one piece. The hub 20 is also preferably formed in one piece with the spokes 21, 22. The spokes 21, 22 and the peripheral member 23 define a recess 24. The recess 24 is a hollow space confined by the spokes 21, 22 and the peripheral member 23. Also the hub 20 may contribute to define the recess 24. The spokes 21, 22 and the peripheral member 23 form an annular-shaped element. Also the hub 20 may form part of the annular shaped element. The spokes 21 and 22 can be connected to the hub 20 on opposite lateral sides thereof.

The peripheral member 23 includes a portion 27 configured to be grasped by the hand of a user. The portion 27 can be substantially rectilinear. The portion 27 may be substantially horizontal when the steering wheel is causing a straight trajectory of the industrial truck. However, a graspable portion 27 may have also a different shape. For example, the graspable portion 27 may follow the path corresponding to a segment of circumference having a center corresponding to a center of the hub 20. The configuration of the steering wheel including a recess 24 and the graspable portion 27 allows to achieve a higher degree of safety by ensuring the possibility to the user to grasp firmly and rapidly the steering wheel in case of, e.g., emergency.

The knob 25 is connected in a rotatable manner to the peripheral member 23 and is configured to be grasped by the user for rotating the steering wheel around the rotation axis 28. The knob 25 can rotate with respect to an integral body of the steering wheel formed by the spokes 21, 22, the hub 20 and the peripheral member 23. The knob can rotate around an axis that is substantially parallel to the rotation axis 28 of the hub 20. In a preferred embodiment, the knob 25 is connected to the peripheral member 23 at the point of connection of the peripheral member 23 with one of the first and second outer ends of the first and the second spokes 21, 22, in the example of figure 2 at the connection between the peripheral member 23 and the spoke 22. Accordingly, the rotation axis of the knob 25 is displaced with respect to the rotation axis of the hub 20, so as to allow the user to steer the steering wheel by acting on the knob 25.

According to the present disclosure, the first and second spokes 21, 22 are inclined with respect to each other of an angle α in the range 40°-140°. The first and second spokes 21, 22 have a substantially rectilinear shape and the angle α can be measured between the longitudinal directions of extension of the respective spokes. The angle α can also be measured between the profiles of the spokes 21, 22 that are the upper profiles when the steering wheel causes a straight trajectory of the industrial truck. In the example in figure 2, the angle α is approximately 90°. According to a further preferred embodiment, the angle α could be in the range 60°-120°. The breadth of the angle α allows to achieve a substantial improvement in the frontal visibility by the user by reducing the angular extension of the peripheral element 23 (or crown) compared to conventional steering wheels. Furthermore, by having two spokes that are angularly displaced apart of at least 40°, more preferably at least 60°, and most preferably of about 90°, a sufficient space for the hollow recess 24 is formed, thereby ensuring a certain extension of the peripheral portion 23 to be grasped by the user in case, e.g., of emergency.

The peripheral member 23 is positioned below the hub 20 when the steering wheel 17 is causing a straight trajectory of the industrial truck; in other words, the peripheral member 23 is positioned at a height from the ground that is lower than the height of the hub 20 from the ground. In fact, when the steering wheel 17 is mounted on the industrial truck, the rotation axis 28 of the steering wheel (and of the hub 20) is inclined with respect to the ground, as visible in figure 1, so that the peripheral member 23 is positioned at a lower level compared to the hub 20. Accordingly, the peripheral member 23 does not interference substantially with the frontal view of the user.

The peripheral member 23 connects the first and second outer ends of the first and second spokes 21, 22 along a path that does not surround the rotation axis 28 of the steering wheel. In other words, the peripheral member 23 does not follow the long path between the spokes 21, 22 so as to surround the hub 20, but the peripheral member 23 follows the short path that is completely below the hub 20. Accordingly, the area above the hub 20 is not occupied by the steering wheel and the vision of the area in front of the cabin by the user is not impaired. The peripheral member 23 terminates at the points of conjunction with the spokes 21, 22. In particular, thanks to the inclination of the spokes 21, 22, also areas at the lateral sides of the hub 20 are not occupied by the steering wheel, thereby further improving the visibility of the front area by the user. In addition, a saving in terms of material usage is achieved compared to steering wheels including an annular peripheral member surrounding the hub 20.

According to a preferred embodiment, a display 26 is mounted on the hub 20. The display 26 may e.g. replicate some of the information displayed by a main display of the industrial truck (not shown), that may be placed at the end of the armrest. Preferably, the display 26 is integral with the hub 20, i.e. it physically rotates together with the hub 20 when the vehicle is steered. The control unit 40 of the industrial truck is configured to refresh the image displayed by the display 26 so that the displayed image is oriented in the same manner with respect to a vertical direction 30 despite different angular positions of the steering wheel. The refresh occurs periodically, so as to ensure that the image is always oriented in the correct manner with respect to the user sitting on the seat 15. The control unit 40 may process the video signal to be input to the display based on a signal received from a steering angle sensor of the industrial truck, so as to generate a video signal that is adapted to the detected steering angle. Since the display 26 is mounted so as to be integral with respect to the hub 20, the construction of the hub 20 and of the supporting structure of the display 26 can be simplified compared to the case in which a display is integral (i.e. not rotatable) with respect to the frame or the structure supporting the hub 20. The steering angle sensor can be implemented according to any known art, e.g. by means of an encoder associated to the steering column of the truck.

The display 26 is mounted on the upper surface of the hub 20 directed towards the user, having e.g. a circular form. In embodiments of the steering wheel that do not provide for an embedded display 26, the upper surface of the hub 20 may be covered by a central cover with or without the manufacturer's logo or by an activation element of the truck horn by pressure.

In a preferred embodiment, at least a switching element 29 is mounted on the knob 25 for controlling a function of the industrial truck. In the example in fig. 3 only one switching element (such as button) is present, but there might be also two or three buttons or levers. Preferably, as well shown in figure 3, the switching element 29 is positioned on a side of the knob 25 facing towards a plane in which the first and second spokes 21, 22 and the peripheral member 23 lie. Accordingly, the palm of the user can firmly be placed in an ergonomic manner on the knob 25, while allowing the activation of the switching element 29 with the fingers of the user hand. An undesired activation of the switching element can thereby be avoided and a comfortable gripping action by the user can be achieved. When activated by the user, the switching element 29 can have different functions, e.g. the function of changing the content displayed by the display 26. Alternatively, the switching element can be in the form of a lever used to define the forward or reverse gear of the industrial truck. Hence, a switching element mounted on the knob can have one of the following functions:
- changing the content displayed by the display,
- changing the driving direction of the industrial truck.

The presence of the switching element on the knob 25 further improves operability of the industrial truck, allowing the user to impart additional commands while driving and steering the vehicle.

In a further preferred embodiment, the steering knob 25 may have an integrated vibration function to give the driver tactile feedback to the driver. More specifically, the knob 25 may include actuating means configured to cause a vibration of the knob 25 to notify an alarm or a predetermined condition of the industrial truck to the user.

The solution proposed in the present disclosure consists in removing the upper portion and lateral portions of the crown of the steering wheel as they are not used while driving the forklift. The structure of the high visibility steering wheel is as follows:
- Hub 20: central part for connection to the steering column, wherein the steering wheel can be hydraulically and/or electrically operated;
- Driving knob 25;
- Connecting spokes 21, 22 between the central hub and the driving knob;
- Semi crown (or peripheral member 23); it can have the shape of a segment of circumference or a plurality of subsequent rectilinear segments, used to connect the spokes together; the grip is more ergonomic due to the more linear shape that allows a better insertion of the hands.

The above description of embodiments applying the innovative principles of the invention is provided solely for the purpose of illustrating said principles and must thus not be considered as limiting the scope of the invention claimed herein.

For example, although the embodiment described referred to a forklift truck, also other type of industrial truck may be implemented according to the invention, including for example also a tugger train. According to an alternative embodiment, the knob might have button or other switching devices also on the upper portion of the knob; the functions of the buttons on the knob can be manifold, from horn function to buttons to interact with the central display of the steering wheel. Furthermore, in an alternative embodiment, the display mounted on the hub might be fixed with respect to the truck frame, i.e. might be decoupled from the rotation of the hub so as to physically maintain always the same orientation with respect to the user. Accordingly, the steering wheel is rotatable with respect to the display so that, when the steering wheel is rotated, the display maintains the same orientation with respect to frame of the industrial truck.

## Claims

1. An industrial truck comprising a frame, a plurality of truck wheels mounted on the frame, and a knob-type steering wheel for controlling the steering of the truck wheels by means of a rotatable knob (25) of the steering wheel,
wherein the steering wheel comprises:
- a hub (20) that is rotatable with respect to the frame around a rotation axis (28) of the steering wheel and that is connected to a steering column of the industrial truck,
- a first spoke (21) having a first outer end and a first central end, the first central end being integrally connected to the hub,
- a second spoke (22) having a second outer end and a second central end, the second central end being integrally connected to the hub,
- a peripheral member (23) connecting the first outer end of the first spoke (21) to the second outer end of the second spoke (22), wherein a recess (24) is defined by the first spoke (21), the second spoke (22) and the peripheral member (23), wherein the peripheral member (23) includes a portion (27) configured to be grasped by the hand of a user,
wherein the knob (25) is connected in a rotatable manner to the peripheral member (23) and configured to be grasped by the user for rotating the steering wheel around the rotation axis (28),
wherein the first and second spokes (21, 22) are inclined with respect to each other of an angle (α) in the range 40°-140°, the peripheral member (23) is positioned below the hub (20) when the steering wheel is causing a straight trajectory of the industrial truck, and the peripheral member (23) connects the first and second outer ends of the first and second spokes (21, 22) along a path that does not surround the rotation axis (28) of the steering wheel.

2. The industrial truck according to claim 1, wherein the portion (27) of the peripheral member (23) that is configured to be grasped by the hand of the user is substantially rectilinear and substantially horizontal when the steering wheel is causing a straight trajectory of the industrial truck.

3. The industrial truck according to claims 1 or 2, wherein the knob (25) is connected to the peripheral member (23) at the point of connection of the peripheral member (23) with one of the first and second outer ends of the first and the second spokes (21, 22).

4. The industrial truck according to any claims 1-3, wherein a display (26) is mounted on the hub (20).

5. The industrial truck according to claim 4, wherein the display (26) is integral with the hub (20), and wherein the industrial truck includes a control unit (40) configured to refresh the image displayed by the display (26) so that the displayed image is oriented in the same manner with respect to a vertical direction despite different angular positions of the steering wheel.

6. The industrial truck according to any of the preceding claims, wherein at least a switching element (29) is mounted on the knob (25).

7. The industrial truck according to claim 6, wherein the switching element (29) is positioned on a side of the knob (25) facing towards a plane in which the first and second spokes (21, 22) and the peripheral member (23) lie.

8. The industrial truck according to claims 4 and 6, wherein, when activated by the user, the switching element (29) has the function of changing the content displayed by the display (26).

9. The industrial truck according to any of claims 1-8, wherein the knob (25) includes actuating means configured to cause a vibration of the knob (25) to notify an alarm or a predetermined condition of the industrial truck to the user.

10. The industrial truck according to any of claims 1-9, wherein the first and second spokes (21, 22) are inclined with respect to each other of an angle (α) in the range 60°-120°.

11. The industrial truck according any of claims 1-10, wherein first and second spokes and the peripheral member (23) form an annular-shaped element that defines the recess (24).

## Patentansprüche

1. Flurförderzeug, umfassend einen Rahmen, eine Vielzahl von am Rahmen montierten Fahrzeugrädern und ein Lenkrad vom Knauftyp zur Steuerung der Lenkung der Fahrzeugräder mittels eines drehbaren Knaufs (25) des Lenkrades,
wobei das Lenkrad umfasst:
- eine Nabe (20), die in Bezug auf den Rahmen um eine Drehachse (28) des Lenkrads drehbar ist und mit einer Lenksäule des Flurförderzeugs verbunden ist,
- eine erste Speiche (21) mit einem ersten äußeren Ende und einem ersten Zentralende, wobei das erste Zentralende integral mit der Nabe verbunden ist,
- eine zweite Speiche (22) mit einem zweiten äußeren Ende und einem zweiten Zentralende, wobei das zweite Zentralende integral mit der Nabe verbunden ist,
- ein Peripherieteil (23), das das erste äußere Ende der ersten Speiche (21) mit dem zweiten äußeren Ende der zweiten Speiche (22) verbindet, wobei eine Aussparung (24) durch die erste Speiche (21), die zweite Speiche (22) und das Peripherieteil (23) definiert ist, wobei das Peripherieteil (23) einen Bereich (27) beinhaltet, der konfiguriert ist, mit der Hand eines Benutzers ergriffen zu werden,
wobei der Knauf (25) drehbar mit dem Peripherieteil (23) verbunden ist und konfiguriert ist, um vom Benutzer zum Drehen des Lenkrads um die Drehachse (28) ergriffen zu werden,
wobei die ersten und zweiten Speichen (21, 22) in Bezug zueinander um einen Winkel (α) im Bereich von 40°-140° geneigt sind, das Peripherieteil (23) unterhalb der Nabe (20) positioniert ist, wenn das Lenkrad eine gerade Trajektorie des Flurförderzeugs verursacht, und das Peripherieteil (23) die ersten und zweiten äußeren Enden der ersten und zweiten Speichen (21, 22) entlang einer Bahn verbindet, die die Drehachse (28) des Lenkrads nicht umgibt.

2. Flurförderzeug nach Anspruch 1, wobei der Bereich (27) des Peripherieteils (23), der so gestaltet ist, dass er von der Hand des Benutzers ergriffen werden kann, im Wesentlichen geradlinig und im Wesentlichen horizontal ist, wenn das Lenkrad eine gerade Flugbahn des Flurförderzeugs verursacht.

3. Flurförderzeug nach Anspruch 1 oder 2, wobei der Knopf (25) mit dem Peripherieteil (23) an dem Punkt verbunden ist, an dem das Peripherieteil (23) mit einem der ersten und zweiten äußeren Enden der ersten und zweiten Speichen (21, 22) verbunden ist.

4. Flurförderzeug nach einem der Ansprüche 1 bis 3, wobei an der Nabe (20) eine Anzeige (26) angebracht ist.

5. Flurförderzeug nach Anspruch 4, wobei die Anzeige (26) mit der Nabe (20) integriert ist und wobei das Flurförderzeug eine Steuereinheit (40) umfasst, die so konfiguriert ist, dass sie das von der Anzeige (26) angezeigte Bild auffrischt, so dass das angezeigte Bild in Bezug auf eine vertikale Richtung trotz unterschiedlicher Winkelpositionen des Lenkrads auf die gleiche Weise ausgerichtet ist.

6. Flurförderzeug nach einem der vorhergehenden Ansprüche, **dadurch gekennzeichnet, dass** an dem Knauf (25) mindestens ein Schaltelement (29) angebracht ist.

7. Flurförderzeug nach Anspruch 6, wobei das Schaltelement (29) auf einer Seite des Knaufs (25) angeordnet ist, die einer Ebene zugewandt ist, in der die ersten und zweiten Speichen (21, 22) und das Peripherieteil (23) liegen.

8. Flurförderzeug nach einem der Ansprüche 4 und 6, wobei das Schaltelement (29) bei Aktivierung durch den Benutzer die Funktion hat, den durch die Anzeige (26) angezeigten Inhalt zu ändern.

9. Flurförderzeug nach einem der Ansprüche 1-8, wobei der Knauf (25) ein Betätigungsmittel enthält, das konfiguriert ist, eine Vibration des Knopfes (25) zu verursachen, um dem Benutzer einen Alarm oder einen vorbestimmten Zustand des Flurförderzeugs mitzuteilen.

10. Flurförderzeug nach einem der Ansprüche 1 bis 9, wobei die ersten und zweiten Speichen (21, 22) um einen Winkel (α) im Bereich von 60° bis 120° zueinander geneigt sind.

11. Flurförderzeug nach einem der Ansprüche 1-10, wobei die ersten und zweiten Speichen und das Peripherieteil (23) ein ringförmiges Element bilden, das die Aussparung (24) definiert.

## Revendications

1. Chariot de manutention comprenant un châssis, une pluralité de roues de chariot montée sur le châssis, et un volant de type à bouton pour commander la direction des roues de chariot au moyen d'un bouton rotatif (25) du volant,
dans lequel le volant comprend :
un moyeu (20) qui peut tourner par rapport au châssis autour d'un axe de rotation (28) du volant et qui est raccordé à une colonne de direction du chariot de manutention,
un premier rayon (21) ayant une première extrémité externe et une première extrémité centrale, la première extrémité centrale étant raccordée, de manière solidaire, au moyeu,
un second rayon (22) ayant une seconde extrémité externe et une seconde extrémité centrale, la seconde extrémité centrale étant raccordée, de manière solidaire, au moyeu,
un élément périphérique (23) raccordant la première extrémité externe du premier rayon (21) à la seconde extrémité externe du second rayon (22), dans lequel un évidement (24) est défini par le premier rayon (21), le second rayon (22) et l'élément périphérique (23), dans lequel l'élément périphérique (23) comprend une partie (27) configurée pour être saisie par la main d'un utilisateur,
dans lequel le bouton (25) est raccordé d'une manière rotative à l'élément périphérique (23) et configuré pour être saisi par l'utilisateur pour faire tourner le volant autour de l'axe de rotation (28),
dans lequel les premier et second rayons (21, 22) sont inclinés l'un par rapport à l'autre selon un angle (α) dans la plage de 40° à 140°, l'élément périphérique (23) est positionné au-dessous du moyeu (20) lorsque le volant provoque une trajectoire droite du chariot de manutention, et l'élément périphérique (23) raccorde les première et seconde extrémités externes des premier et second rayons (21, 22) le long d'une trajectoire qui n'entoure pas l'axe de rotation (28) du volant.

2. Chariot de manutention selon la revendication 1, dans lequel la partie (27) de l'élément périphérique (23) qui est configurée pour être saisie par la main de l'utilisateur est sensiblement rectiligne et sensiblement horizontale lorsque le volant provoque une trajectoire droite du chariot de manutention.

3. Chariot de manutention selon les revendications 1 ou 2, dans lequel le bouton (25) est raccordé à l'élément périphérique (23) au point de raccordement de l'élément périphérique (23) avec l'une des première et seconde extrémités externes des premier et second rayons (21, 22).

4. Chariot de manutention selon l'une quelconque des revendications 1 à 3, dans lequel un affichage (26) est monté sur le moyeu (20).

5. Chariot de manutention selon la revendication 4, dans lequel l'affichage (26) est solidaire avec le moyeu (20) et dans lequel le chariot de manutention comprend une unité de commande (40) configurée pour rafraîchir l'image affichée par l'affichage (26) de sorte que l'image affichée est orientée de la même manière par rapport à une direction verticale malgré différentes positions angulaires du volant.

6. Chariot de manutention selon l'une quelconque des revendications précédentes, dans lequel au moins un élément de commutation (29) est monté sur le bouton (25).

7. Chariot de manutention selon la revendication 6, dans lequel l'élément de commutation (29) est positionné sur un côté du bouton (25) orienté vers un plan dans lequel les premier et second rayons (21, 22) et l'élément périphérique (23) se trouvent.

8. Chariot de manutention selon les revendications 4 et 6, dans lequel, lorsqu'il est activé par l'utilisateur, l'élément de commutation (29) a la fonction de changer le contenu affiché par l'affichage (26).

9. Chariot de manutention selon l'une quelconque des revendications 1 à 8, dans lequel le bouton (25) comprend des moyens d'actionnement configurés pour provoquer une vibration du bouton (25) afin de notifier une alarme ou une condition prédéterminée du chariot de manutention à l'utilisateur.

10. Chariot de manutention selon l'une quelconque des revendications 1 à 9, dans lequel les premier et second rayons (21, 22) sont inclinés l'un par rapport à l'autre selon un angle (α) dans la plage de 60° à 120°.

11. Chariot de manutention selon l'une quelconque des revendications 1 à 10, dans lequel les premier et second rayons et l'élément périphérique (23) forment un élément de forme annulaire qui définit l'évidement (24).
